# EUROPÄISCHE PATENTANMELDUNG

(11) **EP 1 103 406 A2**
(43) Veröffentlichungstag der Anmeldung: **30.05.2001**
(21) Anmeldenummer: 00125671.8
(22) Anmeldetag: 23.11.2000
(51) Int. Cl.: B60K 15/03

(54) **Kraftstoffbehälter**

(30) Priorität: 27.11.1999 DE 19957253
(71) Anmelder: Mannesmann VDO Aktiengesellschaft, 60388 Frankfurt am Main (DE)
(72) Erfinder: Gerhardt, Marc, 44379 Dortmund (DE); Kochsmeier, Christian, 44137 Dortmund (DE); Löw, Peter Andreas, 64380 Rossdorf (DE); Zapp, Thomas, Dr., 44265 Dortmund (DE); Keller, Dieter, 63743 Aschaffenburg (DE)
(74) Vertreter: Barz, Torsten (DE)

(57) **Zusammenfassung**

Bei einem Kraftstoffbehälter (1) mit einem insbesondere bei Wartungsarbeiten zu öffnenden Verschluß wird ein Verschlußteil (6) in einer wannenförmigen Vertiefung (2) der Wandung des Kraftstoffbehälters (1) mittels einer Mutter (7) befestigt. Die Mutter (7) hat ein zum Einschneiden in einen Wulst (5) des Kraftstoffbehälters (1) vorgesehenes Gewinde (9). Hierdurch läßt sich der Kraftstoffbehälter (1) besonders kostengünstig aus geometrisch einfachen Teilen fertigen.

## Beschreibung

Die Erfindung betrifft einen Kraftstoffbehälter mit einem insbesondere bei Wartungsarbeiten zu öffnenden Verschluß, welcher bei Ersteinsatz einteilig mit dem Kraftstoffbehälter gefertigt oder stoffschlüssig mit diesem verbunden ist und Haltemittel für ein formschlüssig mit dem Kraftstoffbehälter verbindbares Verschlußteil aufweist.

Solche Kraftstoffbehälter werden meist aus miteinander verschweißten Schalenteilen gefertigt und sind aus der Praxis bekannt. In dem Kraftstoffbehälter einzusetzende Bauteile wie beispielsweise Saugstrahlpumpen oder eine Kraftstoffördereinheit werden an den Innenseiten der Schalenteile vor deren Verschweißung montiert. Der Verschluß ist als Teil der Wandung des Kraftstoffbehälters ausgebildet und wird beispielsweise von einer umlaufenden Rille begrenzt. Nach der Verschweißung sind die Bauteile innerhalb des Kraftstoffbehälters angeordnet. Im Wartungsfalle läßt sich der Verschluß aus dem Kraftstoffbehälter heraustrennen. Nach Abschluß der Wartungsarbeiten wird die durch Entfernung des Verschlusses gebildete Öffnung mittels des mit dem Kraftstoffbehälter als Zubehörteil mitgelieferten Verschlußteils geschlossen. Hierfür hat der Kraftstoffbehälter einen unterhalb der von dem Verschluß gebildeten Öffnung liegenden Stutzen mit einem daran angeordneten Gewinde. Die zunächst vollständig geschlossene Gestaltung des Kraftstoffbehälters hat den Vorteil, daß ein Entweichen von Kraftstoffdämpfen aus dem im Neuzustand befindlichen Kraftstoffbehälter besonders gering gehalten wird. Die bei einem wiederverwendbaren Verschluß unvermeidbare, relativ geringe Emission von Kraftstoffdämpfen tritt daher erst im unwahrscheinlichen Wartungsfall auf.

Nachteilig bei dem bekannten Kraftstoffbehälter ist, daß der zur Verbindung mit dem Verschlußteil vorgesehene Stutzen mit dem Gewinde ein geometrisch schwierig zu fertigendes Formteil darstellt. Hierdurch ist der Kraftstoffbehälter sehr kostenintensiv zu fertigen.

Der Erfindung liegt das Problem zugrunde, einen Kraftstoffbehälter der eingangs genannten Art so zu gestalten, daß er besonders kostengünstig herzustellen ist.

Dieses Problem wird erfindungsgemäß dadurch gelöst, daß der Kraftstoffbehälter im Bereich des Verschlusses zum Einschneiden eines zur Befestigung des Verschlußteils vorgesehenen Gewindes gestaltet ist.

Durch diese Gestaltung läßt sich der erfindungsgemäße Kraftstoffbehälter aus geometrisch einfachen Schalenteilen zusammensetzen. Da das Gewinde zur Befestigung des Verschlußteils bei dessen Montage erzeugt wird, benötigt der erfindungsgemäße Kraftstoffbehälter kein vorgeformtes Gewinde. Der erfindungsgemäße Kraftstoffbehälter läßt sich hierdurch jeweils aus geometrisch einfach gestalteten Formteilen zusammensetzen. Die einzelnen Formteile können beispielsweise jeweils in axial entformbaren Spritzgußformen hergestellt werden. Hierdurch läßt sich der erfindungsgemäße Kraftstoffbehälter besonders kostengünstig herstellen. Der erfindungsgemäße Kraftstoffbehälter kann beispielsweise wie der bekannte Kraftstoffbehälter einteilig mit dem Verschluß gefertigt sein. Alternativ dazu kann der erfindungsgemäße Kraftstoffbehälter auch zunächst mit einer Montageöffnung versehen und der Verschluß mit dem Kraftstoffbehälter verklebt oder verschweißt sein.

Der zum Einschneiden eines Gewindes vorgesehene Bereich des erfindungsgemäßen Kraftstoffbehälters hat eine besonders hohe Stabilität, wenn der Kraftstoffbehälter einen ringförmigen, im Neuzustand um den Verschluß umlaufenden Wulst hat.

Die Montage des Verschlußteils gestaltet sich gemäß einer anderen vorteilhaften Weiterbildung der Erfindung besonders einfach, wenn das Gewinde auf einer in den Wulst einzudrehenden, zur Halterung des Verschlußteils vorgesehenen Mutter angeordnet ist.

Ein Verkanten oder Kippen des Verschlußteils läßt sich gemäß einer anderen vorteilhaften Weiterbildung der Erfindung zuverlässig vermeiden, wenn das Verschlußteil einen Flansch mit mehreren einzelnen, in den Kraftstoffbehälter einzudrehenden Schrauben aufweist.

Wenn das Gewinde gemäß einer anderen vorteilhaften Weiterbildung selbstschneidend gestaltet ist, ist zu seiner Erzeugung in dem Kraftstoffbehälter kein Spezialwerkzeug erforderlich.

Eine Kennzeichnung des Verschlusses und der Begrenzung des Verschlusses läßt sich gemäß einer anderen vorteilhaften Weiterbildung der Erfindung einfach festlegen, wenn der Verschluß im Bodenbereich einer wannenförmigen Vertiefung angeordnet ist.

Ein Entweichen von Kraftstoffdämpfen aus dem erfindungsgemäßen Kraftstoffbehälter bei herausgetrenntem Verschluß und montiertem Verschlußteil läßt sich besonders gering halten, wenn die wannenförmige Vertiefung an ihrer Wandung eine zur Abstützung von Dichtelementen des Verschlußteils vorgesehene Dichtfläche hat.

Eine Beschädigung des Wulstes beim Heraustrennen des Verschlusses läßt sich gemäß einer anderen vorteilhaften Weiterbildung der Erfindung zuverlässig vermeiden, wenn der Wulst in dem an die wannenförmige Vertiefung angrenzenden Bereich des Kraftstoffbehälters angeordnet ist.

Der Wulst ist bei der Montage des Verschlußteils leicht sichtbar, wenn der Wulst an der Außenseite des Kraftstoffbehälters angeordnet ist. Hierdurch wird vermieden, daß das Verschlußteil neben dem Wulst befestigt wird.

Ein seitliches Wegbewegen des Wulstes beim Eindrehen des das Außengewinde aufweisenden Verschlußteils läßt sich gemäß einer anderen vorteilhaften Weiterbildung der Erfindung zuverlässig durch einen den Wulst umschließenden Stützring verhindern.

Ein Lösen des Stützrings und damit des Verschlußteils läßt sich gemäß einer anderen vorteilhaften Weiterbildung der Erfindung zuverlässig verhindern, wenn der Stützring und das Verschlußteil über eine Verliersicherung miteinander verbunden sind. Diese Verliersicherung kann beispielsweise als an einem der Bauteile angeordnete, gegen das andere Bauteil umlegbare Zunge gestaltet sein.

Eine Verspannung der Dichtfläche in der wannenförmigen Vertiefung beim Befestigen des Verschlußteils läßt sich gemäß einer anderen vorteilhaften Weiterbildung der Erfindung einfach vermeiden, wenn der Wulst an der Innenseite des Kraftstoffbehälters angeordnet und von der wannenförmigen Vertiefung geringfügig beabstandet ist. Dies führt insbesondere bei dem mit dem erfindungsgemäßen Kraftstoffbehälter über mehrere Schrauben zu verschraubenden Verschlußteil zu einer hohen und dauerhaften Dichtheit des erfindungsgemäßen Kraftstoffbehälters.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen Teilbereich einer Wandung eines erfindungsgemäßen Kraftstoffbehälters mit einem Verschluß und einem Verschlußteil in einer Schnittdarstellung,
- Fig.2: den Kraftstoffbehälter aus Figur 1 mit montiertem Verschlußteil,
- Fig.3: eine Schnittdarstellung durch eine weitere Ausführungsform des Kraftstoffbehälters mit montiertem Verschlußteil.

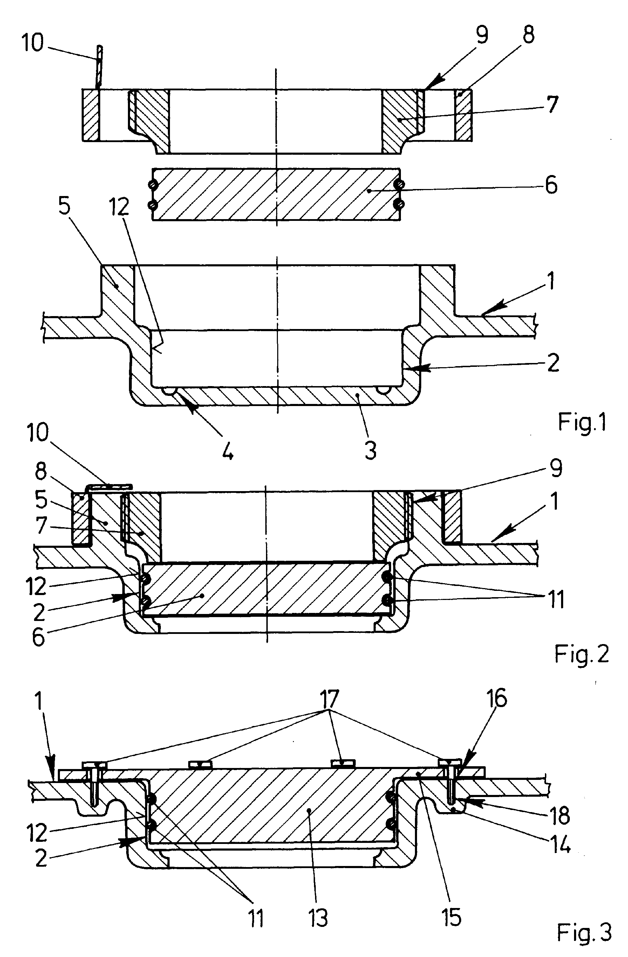

Figur 1 zeigt eine Schnittdarstellung durch die Wandung eines Kraftstoffbehälters 1 im Bereich eines in einer wannenförmigen Vertiefung 2 angeordneten Verschlusses 3. Der Verschluß 3 ist im Bodenbereich der wannenförmigen Vertiefung 2 angeordnet und einteilig mit dem Kraftstoffbehälter 1 gefertigt. Hierdurch können keine Kraftstoffdämpfe aus dem Kraftstoffbehälter 1 entweichen. Eine in dem Bodenbereich der wannenförmigen Vertiefung 2 angeordnete umlaufende Rille 4 dient als Markierung und Sollbruchstelle für den Verschluß 3. Damit läßt sich im Wartungsfalle der Verschluß 3 einfach entlang der Rille 4 aus dem Kraftstoffbehälter 1 heraustrennen. Auf seiner Außenseite hat der Kraftstoffbehälter 1 einen um die wannenförmige Vertiefung 2 umlaufenden Wulst 5. Nach dem Heraustrennen des Verschlusses 3 wird ein Verschlußteil 6 abdichtend in die wannenförmige Vertiefung 2 eingesetzt und mittels einer Mutter 7 und einem Stützring 8 gehalten.

Figur 2 zeigt den Kraftstoffbehälter 1 aus Figur 1 nach einem Heraustrennen des Verschlusses 3 und dem Einsetzen des Verschlußteils 6. Das Heraustrennen des in Figur 1 dargestellten Verschlusses 3 ist beispielsweise dann erforderlich, wenn nicht dargestellte, innerhalb des Kraftstoffbehälters 1 angeordnete Bauteile wie beispielsweise eine Fördereinheit gewartet oder ausgetauscht werden müssen. Die Mutter 7 weist an ihrer Außenseite ein Gewinde 9 auf, mit welchem sie in den Wulst 5 eingedreht ist. Von radial außen wird der Wulst 5 von dem Stützring 8 gehalten. An dem Stützring 8 ist zudem eine als Zunge gestaltete Verliersicherung 10 angeordnet. Im montierten Zustand des Verschlußteils 6 liegt die Verliersicherung 10 an der Mutter 7 an. Das Verschlußteil 6 ist scheibenförmig gestaltet und hat an seiner Mantelfläche zwei ringförmige Dichtelemente 11. Die Dichtelemente 11 liegen an einer an der Innenseite der wannenförmigen Vertiefung 2 angeordneten Dichtfläche 12 an. Hierdurch wird ein Entweichen von Kraftstoffdämpfen aus dem Kraftstoffbehälter 1 besonders gering gehalten.

Figur 3 zeigt eine weitere Ausführungsform des erfindungsgemäßen Kraftstoffbehälters 1 mit einem in die wannenförmige Vertiefung 2 eingesetzten Verschlußteil 13. Die wannenförmige Vertiefung 2 hat in ihrem Bodenbereich eine Öffnung, die im Neuzustand von dem in Figur 1 dargestellten Verschluß 3 verschlossen war. An seiner Innenseite weist der Kraftstoffbehälter 1 einen um die wannenförmige Vertiefung 2 umlaufenden Wulst 14 auf. Das Verschlußteil 13 hat an seiner die Außenseite des Kraftstoffbehälters 1 bildenden Seite einen Flansch 15 und wird mittels mehrerer durch Bohrungen 16 des Flansches 15 hindurchgeführter, in den Wulst 15 eingedrehter Schrauben 17 an dem Kraftstoffbehälter 1 befestigt. Der Wulst 14 dient zur Verstärkung des zur Verschraubung ausgebildeten Bereichs des Kraftstoffbehälters 1. Die Schrauben 17 weisen jeweils ein selbstschneidendes Gewinde 18 auf.

## Patentansprüche

1. Kraftstoffbehälter mit einem insbesondere bei Wartungsarbeiten zu öffnenden Verschluß, welcher bei Ersteinsatz einteilig mit dem Kraftstoffbehälter gefertigt oder stoffschlüssig mit diesem verbunden ist und Haltemittel für ein formschlüssig mit dem Kraftstoffbehälter verbindbares Verschlußteil aufweist, **dadurch gekennzeichnet**, daß der Kraftstoffbehälter (1) im Bereich des Verschlusses (3) zum Einschneiden eines zur Befestigung des Verschlußteils (6, 13) vorgesehenen Gewindes (9, 18) gestaltet ist.

2. Kraftstoffbehälter nach Anspruch 1, **dadurch gekennzeichnet**, daß der Kraftstoffbehälter (1) einen ringförmigen, im Neuzustand um den Verschluß (3) umlaufenden Wulst (5, 14) hat.

3. Kraftstoffbehälter nach Anspruch 1 oder 2, **dadurch gekennzeichnet**, daß das Gewinde (9) auf einer in den Wulst (5) einzudrehenden, zur Halterung des Verschlußteils (6) vorgesehenen Mutter (7) angeordnet ist.

4. Kraftstoffbehälter nach zumindest einem der vorhergehenden Ansprüche, **dadurch gekennzeichnet**, daß das Verschlußteil (13) einen Flansch (15) mit mehreren einzelnen, in den Kraftstoffbehälter (1) einzudrehenden Schrauben (17) aufweist.

5. Kraftstoffbehälter nach zumindest einem der vorhergehenden Ansprüche, **dadurch gekennzeichnet**, daß das Gewinde (9, 18) selbstschneidend gestaltet ist.

6. Kraftstoffbehälter nach zumindest einem der vorhergehenden Ansprüche, **dadurch gekennzeichnet**, daß der Verschluß (3) im Bodenbereich einer wannenförmigen Vertiefung (2) angeordnet ist.

7. Kraftstoffbehälter nach zumindest einem der vorhergehenden Ansprüche, **dadurch gekennzeichnet**, daß die wannenförmige Vertiefung (2) an ihrer Wandung eine zur Abstützung von Dichtelementen (11) des Verschlußteils (6, 13) vorgesehene Dichtfläche (12) hat.

8. Kraftstoffbehälter nach zumindest einem der vorhergehenden Ansprüche, **dadurch gekennzeichnet**, daß der Wulst (5, 14) in dem an die wannenförmige Vertiefung (2) angrenzenden Bereich des Kraftstoffbehälters (1) angeordnet ist.

9. Kraftstoffbehälter nach zumindest einem der vorhergehenden Ansprüche, **dadurch gekennzeichnet**, daß der Wulst (5) an der Außenseite des Kraftstoffbehälters (1) angeordnet ist.

10. Kraftstoffbehälter nach zumindest einem der vorhergehenden Ansprüche, **gekennzeichnet durch** einen den Wulst (5) umschließenden Stützring (8).

11. Kraftstoffbehälter nach zumindest einem der vorhergehenden Ansprüche, **dadurch gekennzeichnet**, daß der Stützring (8) und das Verschlußteil (6) über eine Verliersicherung (10) miteinander verbunden sind.

12. Kraftstoffbehälter nach zumindest einem der vorhergehenden Ansprüche, **dadurch gekennzeichnet**, daß der Wulst (14) an der Innenseite des Kraftstoffbehälters (1) angeordnet und von der wannenförmigen Vertiefung (2) geringfügig beabstandet ist.
